# EUROPEAN PATENT APPLICATION

(11) **EP 4 404 653 A1**
(43) Date of publication of application: **24.07.2024**
(21) Application number: 21957003.3
(22) Date of filing: 14.09.2021
(51) Int. Cl.: H04W 72/04

(54) **RESOURCE CONFIGURATION METHOD, NETWORK DEVICE AND ZERO-POWER TERMINAL**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZUO, Zhisong, Dongguan, Guangdong 523860 (CN); ZHANG, Zhi, Dongguan, Guangdong 523860 (CN)
(74) Representative: Novagraaf Technologies
(86) International application number: PCT/CN2021/118162
(87) International publication number: WO 2023/039709

(57) **Abstract**

The present application relates to a resource configuration method, a network device, a zero-power terminal, a chip, a computer-readable storage medium, a computer program product, a computer program and a communication system. The method comprises: a network device sending first signaling, wherein the first signaling is used for indicating at least one resource configuration, which corresponds to at least one resource set on a one-to-one basis, and each of the at least one resource set comprises at least one resource unit for a reverse link that is used for zero-power communication. By means of the embodiments of the present application, the probability of a conflict occurring between zero-power terminals can be decreased.

## Description

### TECHNICAL FIELD

The present disclosure relates to the field of communication, and in particular to a resource configuration method, a network device, a zero-power-consumption terminal, a chip, a computer-readable storage medium, a computer program product, a computer program, and a communication system.

### BACKGROUND

Zero-power-consumption communication, which is achieved based on power harvesting and backscattering communication, has extremely low costs, zero power consumption, and a small size, and therefore, the zero-power-consumption communication is widely applied in various industries, such as logistics for vertical industries, smart warehousing, smart agriculture, energy and power, and industrial Internet. The zero-power-consumption communication may further be applied to personal applications such as smart wearable devices and smart homes.

In various zero-power-consumption communication scenarios, the number of zero-power-consumption terminals communicating with a network device is large. For example, in a logistics scenario, the network device needs to read information of hundreds or thousands of the zero-power-consumption terminals in a short period of time (such as within a few seconds). How to accurately complete communication with the large number of zero-power-consumption terminals is a problem that needs to be solved.

### SUMMARY OF THE DISCLOSURE

The present disclosure provides a resource configuration method, a network device, a zero-power-consumption terminal, a chip, a computer-readable storage medium, a computer program product, a computer program, and a communication system, which may be applied to a zero-power-consumption communication system.

The present disclosure provides a resource configuration method, including: sending, by a network device, a first signaling. The first signaling is configured to indicate at least one resource configuration; the at least one resource configuration and at least one resource set is in one-to-one correspondence with each other; each resource set of the at least one resource set comprises at least one resource unit for a backward link for zero-power-consumption communication.

The present disclosure provides a resource configuration method, including: receiving, by a zero-power-consumption terminal, a first signaling. The first signaling is configured to indicate at least one resource configuration; the at least one resource configuration and at least one resource set are in one-to-one correspondence with each other; each resource set of the at least one resource set comprises at least one resource unit for a backward link for zero-power-consumption communication.

The present disclosure provides a network device, including: a first communication module, configured to send a first signaling. The first signaling is configured to indicate at least one resource configuration; the at least one resource configuration and at least one resource set is in one-to-one correspondence with each other; each resource set of the at least one resource set comprises at least one resource unit for a backward link for zero-power-consumption communication.

The present disclosure provides a zero-power-consumption terminal, including: a second communication module, configured to receive a first signaling. The first signaling is configured to indicate at least one resource configuration; the at least one resource configuration and at least one resource set are in one-to-one correspondence with each other; each resource set of the at least one resource set comprises at least one resource unit for a backward link for zero-power-consumption communication.

The present disclosure provides a network device, including: a processor and a memory, wherein the memory is configured to store a computer program, the processor is configured to invoke and run the computer program stored in the memory to perform the resource configuration method of any embodiment of the present disclosure.

The present disclosure provides a network device, including: a processor and a memory, wherein the memory is configured to store a computer program, the processor is configured to invoke and run the computer program stored in the memory to perform the resource configuration method of any embodiment of the present disclosure.

The present disclosure provides a chip, including: a processor, configured to invoke and run a computer program from a memory to cause a device arranged with the chip to perform the resource configuration method of any embodiment of the present disclosure.

The present disclosure provides a computer-readable storage medium, configured to store a computer program. The computer program is configured to cause a computer to perform the resource configuration method of any embodiment of the present disclosure.

The present disclosure provides a computer program product, including computer program instructions. The computer program instructions are configured to cause a computer to perform the resource configuration method of any embodiment of the present disclosure.

The present disclosure provides a computer program, configured to cause a computer to perform the resource configuration method of any embodiment of the present disclosure.

The present disclosure provides a communication system, including: a network device and a zero-power-consumption terminal, configured to perform the resource configuration method of any embodiment of the present disclosure.

In the present disclosure, the network device indicates, by sending the first signaling, at least one resource configuration to configure at least one resource set for the zero-power-consumption terminal, enabling the zero-power-consumption terminal to select the resource for the backward link from the configuration resource set. In this way, probability of conflict between the zero-power-consumption terminals is reduced, and communication between the network device and a large number of zero-power-consumption terminals may be completed accurately.

### BRIEF DESCRIPTION OF THE DRAWINGS

FIG. 1 is a schematic view of an architecture of a communication system.
FIG. 2 is a schematic view of a zero-power-consumption communication system according to an embodiment of the present disclosure.
FIG. 3 is a schematic view of harvesting radio frequency power according to an embodiment of the present disclosure.
FIG. 4 is a schematic view of backscattering communication according to an embodiment of the present disclosure.
FIG. 5 is a schematic view of modulating resistance load according to an embodiment of the present disclosure.
FIG. 6A is a schematic view of reverse non-return to zero encoding according to an embodiment of the present disclosure.
FIG. 6B is a schematic view of Manchester encoding according to an embodiment of the present disclosure.
FIG. 6C is a schematic view of a unipolar return-to-zero encoding according to an embodiment of the present disclosure.
FIG. 6D is a schematic view of differential binary phase encoding according to an embodiment of the present disclosure.
FIG. 6E is a schematic view of Miller encoding according to an embodiment of the present disclosure.
FIG. 7 is a flow chart of a resource configuration method according to an embodiment of the present disclosure.
FIG. 8 is a flow chart of a resource configuration method according to another embodiment of the present disclosure.
FIG. 9 is a schematic view of resource configuration according to an embodiment of the present disclosure.
FIG. 10 is a schematic view of a resource unit according to an embodiment of the present disclosure.
FIG. 11 is a schematic view of a configuration signaling according to an embodiment of the present disclosure.
FIG. 12 is a schematic view I of a configuration signaling and a scheduling signaling according to another embodiment of the present disclosure.
FIG. 13 is a schematic view II of a configuration signaling and a scheduling signaling according to another embodiment of the present disclosure.
FIG. 14 is a schematic view III of a configuration signaling and a scheduling signaling according to another embodiment of the present disclosure.
FIG. 15 is a schematic view of a network device according to an embodiment of the present disclosure.
FIG. 16 is a schematic view of a zero-power-consumption terminal according to an embodiment of the present disclosure.
FIG. 17 is a schematic view of a zero-power-consumption terminal according to another embodiment of the present disclosure.
FIG. 18 is a schematic view of a communication device according to an embodiment of the present disclosure.
FIG. 19 is a schematic view of a chip according to an embodiment of the present disclosure.
FIG. 20 is a schematic view of a communication system according to an embodiment of the present disclosure.

### DETAILED DESCRIPTION

Technical solutions in embodiments of the present disclosure are described below by referring to the accompanying drawings for the embodiments of the present disclosure.

It should be understood that the terms "system" and "network" are often used interchangeably herein. The term "and/or" is used herein to describe an association relationship of associated objects, such as indicating that three types of relationships may exist between the associated objects. For example, A and/or B may indicate that: the A is present alone, the A and the B are present at the same time, and the B is present alone. In the present disclosure, the character "P' generally indicates that the object before the character "or" the object after the character.

It should be understood that the "instruction" in the embodiments of the present disclosure may be direct instruction, indirect instruction, or indication of an associated relationship. For example, A instructing B may mean that A instructs B directly, such as B obtaining information through A; or A instructs B indirectly, such as A instructing C and B obtaining information through C; or there is an association between A and B.

In the description of the embodiments of the present disclosure, the term "corresponding" may indicate that two objects directly or indirectly correspond with each other; or an associated relationship is present between the two objects; or one object instructs or is instructed by the other object; or one object performs configuration for or is configured by the other object.

Generally, a communication system includes: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, and a new radio (NR) system, a NR evolution system, a LTE-based access to unlicensed spectrum (LTE-U) system, a NR-based access to unlicensed spectrum (NR-U) system, a non-terrestrial network (NTN) system, a universal mobile telecommunication system (UMTS), a wireless local area network (WLAN), and Wireless Fidelity (WiFi), a 5th-generation (5G) system, or other communication systems.

Traditional communication systems support a limited number of connections, which may be easily achieved. However, as communication technologies evolve, a mobile communication system supports the traditional communication and further supports device to device (D2D) communication, machine to machine (M2M) communication, machine type communication (MTC), vehicle to vehicle (V2V) communication, or vehicle to everything (V2X) communication.

The communication system may be applied in carrier aggregation (CA) scenarios, dual connectivity (DC) scenarios, and standalone (SA) deployment scenarios.

The communication system generally includes a network device and a terminal device. The terminal device may be referred to as user equipment (UE), an access terminal, a user unit, a user station, a mobile station, a mobile platform, a remote station, a remote terminal, a mobile device, a user terminal, a terminal, a wireless communication device, a user agent, or a user device, and so on.

The terminal device may be a station (ST) in the WLAN. The terminal device may be a cellular phone, a cordless phone, a session initiation protocol (SIP) phone, a wireless local loop (WLL) station, a personal digital assistant (PDA) device, a handheld device having wireless communication capabilities, a computing device or other processing devices connected to a wireless modem, a vehicle-mounted device, a wearable device, a terminal device in the next-generation communication system such as a NR network, and a terminal device in a future evolved public land mobile network (PLMN).

The terminal device may be deployed on land, including indoors or outdoors, handheld, wearable or vehicle-mounted; or deployed on water (such as on ship and so on); or deployed in the air (such as on aircrafts, balloons, satellites, and so on).

The terminal device may be a mobile phone, a tablet computer (Pad), a computer having wireless sending and receiving functions, a virtual reality (VR) terminal device, an augmented reality (AR) terminal device, a wireless terminal device in industrial control, a wireless terminal device for self-driving, a wireless terminal device for remote medical, a wireless terminal device in smart grid, a wireless terminal device in transport safety, a wireless terminal device in smart city, a wireless terminal device in smart home, and so on.

As an example and not limitation, the terminal device may alternatively be a wearable device. The wearable device, which may also be referred to as a wearable smart device, is a generic term for applying intelligent design on everyday worn devices to develop devices that can be worn. The wearable device may be, such as, glasses, gloves, watches, clothes, and shoes. The wearable device is a portable device that is worn directly on a body or integrated into clothes or accessories of the user. The wearable device is a hardware device and further achieves powerful functions through software support and data interaction and cloud interaction. Broadly speaking, the wearable smart device is a full-featured, large-sized device that achieves complete or partial functionality without relying on a smartphone. For example, the wearable smart device may be a smart watch, smart glasses, a smart bracelet, and a smart jewellery that focuses on a certain type of application functionality and needs to be used cooperatively with other devices such as a smartphone to monitor physiological signs.

The network device may be a device communicating with the mobile device. The network device may be an access point (AP) in WLAN, a base transceiver station (BTS) in the GSM or the CDMA, a base station (NodeB, NB) in the WCDMA, an evolutional base station (eNB or eNodeB) in the LTE, or a relay station or an access point, or a vehicle-mounted device, a wearable device, or a network device (gNB) in the NR network, or a network device in the future evolved PLMN network.

The network device may have mobile properties. For example, the network device may be a mobile device. In some embodiments, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite. In some embodiments, the network device may be a base station set in a location on land, water, and so on.

The network device may provide services for a cell. The terminal device communicates with the network device through transmission resources used by the cell (such as, frequency domain resources, or in other words, spectrum resources). The cell may be a cell corresponding to the network device (such as the base station). The cell may belong to a macro base station or belong to a base station corresponding to a small cell. The small cell includes: a metro cell, a micro cell, a pico cell, a femto cell, and so on. The small cell has a small coverage area and a low transmission power and is suitable for providing high speed data transmission services.

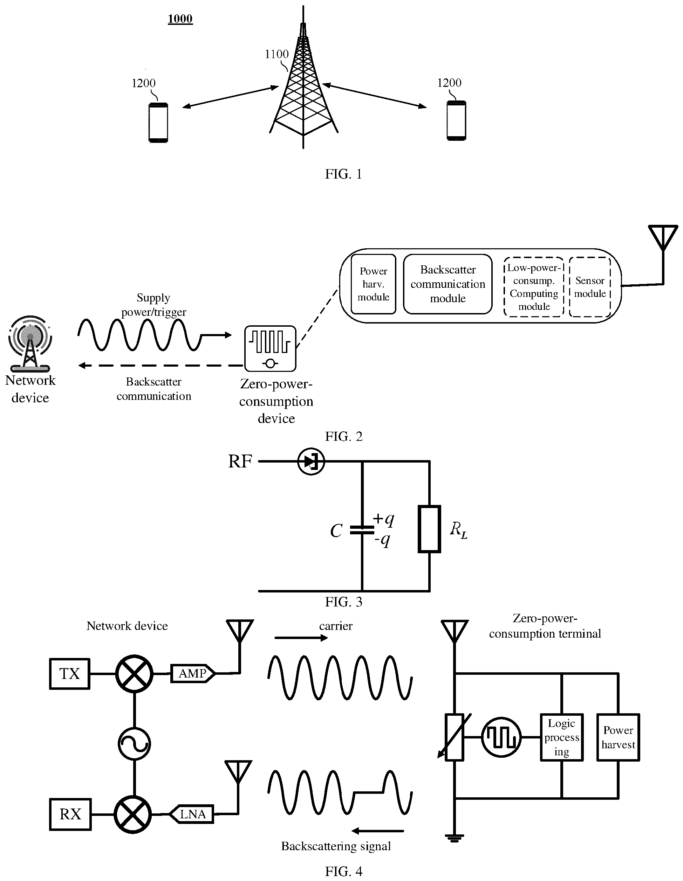

FIG. 1 schematically illustrates a wireless communication system 1000 including a network device 1100 and two terminal devices 1200. In some embodiments, the wireless communication system 1000 may include a plurality of network devices 1100, and other numbers of terminal devices may be arranged in a coverage area of each the plurality of network devices 1100. The present disclosure does not limit the arrangement of the network devices and the terminal devices.

It should be understood that any device, which has communication functions and is included in the network/system in the embodiments of the present disclosure, may be referred to as a communication device. Taking the communication system illustrated in FIG. 1 as an example, the communication device may include the network device and the terminal devices having communication functions. The network device and the terminal devices may be specific devices in the embodiments of the present disclosure, which will not be repeated herein. The communication device may further include other devices in the communication system, such as a network controller, a mobility management entity, and other network entities, which will not be limited in the embodiments of the present disclosure.

The embodiments of the present disclosure may be applied in a zero-power-consumption communication system. In the zero-power-consumption communication system, the terminal device may be a zero-power-consumption terminal. In order to facilitate understanding the technical solutions of the embodiments of the present disclosure, the zero-power-consumption communication system and the zero-power-consumption terminal in the art will be illustrated in the following. The following related art may be optional solutions to be arbitrarily combined with the technical solutions of the embodiments of the present disclosure, all of which shall fall within the scope of the embodiments of the present disclosure.

### (i) Principles of the zero-power-consumption communication technology

Power harvesting and backscattering communication is applied in the zero-power-consumption communication. As shown in FIG. 2, a zero-power-consumption communication network includes a network device and a zero-power-consumption terminal. The network device is configured to send wireless power-supply signals and downlink communication signals to the zero-power-consumption terminal and receive backscatter signals sent from the zero-power-consumption terminal. A basic zero-power-consumption terminal includes a power harvesting module such as a radio frequency (RF) power harvesting module, a backscattering communication module, and a low-power-consumption computing module. In some embodiments, the zero-power-consumption terminal may have a memory or a sensor for storing some basic information (such as item identification and so on) or for obtaining sensing data such as an ambient temperature, ambient humidity, and so on.

Key technologies of the zero-power-consumption communication mainly include RF power harvesting and backscattering communication.

### 1. The RF power harvesting

As shown in FIG. 3, the RF power harvesting module harvests, based on the principle of electromagnetic induction, electromagnetic wave energy in a space to obtain power to drive the zero-power-consumption terminal to operate. Exemplarily, the power may be used to drive a low-power-consumption demodulation and modulation module, sensors, memory reading, and so on. Therefore, the zero-power-consumption terminal does not need a conventional battery.

### 2. Backscattering communication

As shown in FIG. 4, the zero-power-consumption terminal receives the wireless signals (carrier) sent from the network device, modulates the wireless signals to load to-be-sent information on the wireless signals, and then radiates the modulated signals (backscattered signals) from an antenna. This process of information transmission is referred to as the backscattering communication. The backscattering and the load modulation are inextricably linked with each other. Load modulation regulates and controls, based on a beat of a data stream, circuit parameters of an oscillation loop of the zero-power-consumption terminal, enabling parameters, such as impedance, of the zero-power-consumption terminal (such as an electronic label) to be changed accordingly to complete the modulation process.

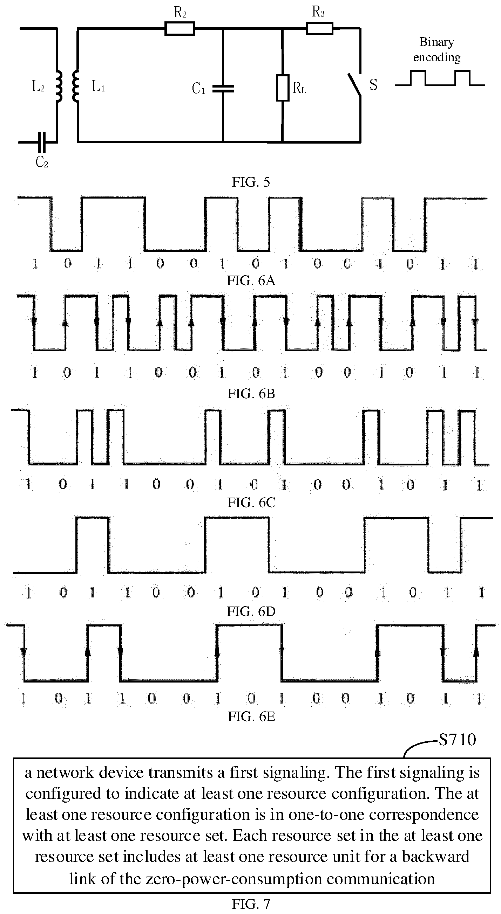

The load modulation substantially includes resistance load modulation and capacitance load modulation. For the resistance load modulation, as shown in FIG. 5, a load R_{L} is connected in parallel with a resistor R₃. A switch S is switched on or off by being controlled by binary data streams to enable the resistor R₃ to be conducted or disconnected. Conducting or disconnecting the resistor R₃ results in a change in a circuit voltage, and therefore, amplitude shift keying (ASK) is achieved. That is, signal modulation and transmission is achieved by adjusting an amplitude of the backscattered signals sent from the zero-power-consumption terminal. Similarly, in the capacitance load modulation, a change in a resonant frequency of the circuit is achieved through the capacitor being conducted or disconnected, such that frequency shift keying (FSK) is achieved. That is, signal modulation and transmission is achieved by adjusting an operating frequency of the backscattered signals of the zero-power-consumption terminal.

It can be seen that the zero-power-consumption terminal performs, based on load modulation, information modulation on the incoming signals to achieve the backscattering communication. Therefore, the zero-power-consumption terminal has significant advantages as follows.
(1) The zero-power-consumption terminal does not proactively transmit signals, and therefore, the zero-power-consumption terminal does not need to be arranged with any complex RF link, such as a power amplifier (PA), a RF filter, and the like.
(2) The zero-power-consumption terminal does not pro actively generate any high-frequency signal, and therefore, the zero-power-consumption terminal does not need to be arranged with a high-frequency crystal.
(3) Based on the backscattering communication, the zero-power-consumption terminal does not need to consume powers of the terminal itself to transmit signals.

### (ii) Application Scenarios of the zero-power-consumption communication

Since the zero-power-consumption terminal has extremely low costs, zero power consumption, and a small size, the zero-power-consumption communication can be widely applied in various industries, such as logistics for vertical industries, smart warehousing, smart agriculture, energy and power, and industrial Internet. The zero-power-consumption communication may further be applied to personal applications such as smart wearable devices and smart homes.

### (iii) Encoding method of the zero-power-consumption communication

When the zero-power-consumption terminal (such as the electronic label) transmits data, various forms of codes may be used to express the binary "1" and "0". Taking a wireless radio frequency recognition device (RFID) as an example, any one of the following encoding methods may be applied: a reverse non-return-to-zero (NRZ) encoding method, the Manchester encoding method, a unipolar return-to-zero (RZ) encoding method, a differential binary phase (DBP) encoding method, the Miller encoding method, and a differential encoding method. Generally, it means that different pulse signals are used to represent the 0 and the 1.

### 1. Reverse NRZ encoding method

In the reverse NRZ encoding method, a high voltage level is used to indicate the binary "1", and a low voltage level is used to indicate the binary "0", as shown in FIG. 6A.

### 2. Manchester encoding method

The Manchester encoding method is also known as a split-phase coding method. In the Manchester encoding method, a value of a bit is represented by a change in a voltage level (increase/decrease) at half of a bit period within a bit length. A negative jump (decrease) at the half of the bit period represents the binary "1", and a positive jump (increase) at the half of the bit period represents the binary "0", as shown in FIG. 6B. When the Manchester encoding method is applied to load modulation of the carrier or backscattering modulation, the Manchester encoding method is usually applied in a scenario of transmitting data from the electronic label to a reader/writer, and this is because the Manchester encoding method allows an error during data transmission to be discovered easily. This is because, in the bit length, a state of "no change" is not allowed. When data bits sent by various electronic labels have different values at the same time, a received increasing edge and a received decreasing edge are neutralized with each other, resulting in carrier signals being uninterrupted in the entire bit length. Since the state of "no change" is not allowed, the reader/writer takes the error to determine a location where collision occurs.

### 3. Unipolar RZ encoding method

For the unipolar RZ encoding method, a high voltage level in a first half of the bit period indicates the binary "1", and a low voltage level that is present throughout the entire bit period indicates the binary "0", as shown in FIG. 6C. The unipolar RZ encoding method can be used to extract a bit synchronization signal.

### 4. DBP encoding method

For the DBP encoding method, any edge of the half of the bit period indicates the binary "0", and any non-edge indicates the binary "1", as shown in FIG. 6D. In addition, the voltages levels are inverted at the beginning of each bit period. Therefore, for the receiver, a bit beat may be reconstructed more easily.

### 5. Miller encoding method

For the Miller encoding method, any edge within the half of the bit period indicates the binary "1", and a voltage level that is unchanged when experiencing a next bit period indicates the binary "0". The voltages levels are changed at the beginning of the bit period, as shown in FIG. 6E. Therefore, for the receiver, a bit beat may be reconstructed more easily.

### 6. Differential encoding method

For the differential encoding method, each to-be-transmitted binary "1" causes a change in the voltage level; whereas for the binary "0", the voltage level is unchanged.

### (iv) Classification of zero-power-consumption terminals

The zero-power-consumption terminals can be classified, based on power sources and usage methods of the zero-power-consumption terminals, into the following types:

### 1. Source-free zero-power-consumption terminal

The source-free zero-power-consumption terminal does not need to be arranged with an internal battery. When the zero-power-consumption terminal is approaching the network device (such as the reader/writer of the RFID), the zero-power-consumption terminal is disposed in a near-field range formed by antenna radiation of the network device. Therefore, an antenna of the zero-power-consumption terminal generates, through electromagnetic induction, induction currents to drive a low-power-consumption chip circuit of the zero-power-consumption terminal. In this way, demodulation of forward link signals and modulation of backward link signals are achieved. For a backscattering link, the zero-power-consumption terminal performs a backscattering implementation to transmit signals.

It can be seen that the source-free zero-power-consumption terminal does not need a built-in battery to drive either the forward link or the backward link, and it is literally a zero-power-consumption terminal.

Since the source-free zero-power-consumption terminal does not need the battery and a RF circuit and a baseband circuit are very simple, for example, a low-noise amplifier (LNA), a PA, a crystal, an analogue-to-digital converter (ADC), and other devices are not required, the zero-power-consumption terminal has a small size, is light in weight, and has a lower price and a long service life.

### 2. Semi-source-free zero-power-consumption terminal

The semi-source-free zero-power-consumption terminal does not need to be arranged with a conventional battery but uses a RF power harvesting module to harvest radio wave energies and stores the collected power in a power storage unit (such as a capacitor). After the power storage unit obtains the power, the power storage unit drives the low-power-consumption chip circuit of the zero-power-consumption terminal. In this way, demodulation of forward link signals and modulation of backward link signals are achieved. For the backscattering link, the zero-power-consumption terminal performs the backscattering implementation to transmit signals.

It can be seen that the semi-source-free zero-power-consumption terminal does not need the built-in battery to drive either the forward link or the backward link. Although the power stored in the capacitor is used during operation, the power comes from the radio energies collected by the power harvesting module. Therefore, it is also literally a zero-power-consumption terminal.

The semi-source-free zero-power-consumption terminal also has various advantages of the source-free zero-power-consumption terminal. The semi-source-free zero-power-consumption has a small size, is light in weight, and has a lower price and a long service life.

### 3. Source-arranged zero-power-consumption terminal

The zero-power-consumption terminals used in some scenarios may be a power source-arranged zero-power-consumption terminal. The power source-arranged zero-power-consumption may be arranged with a built-in battery. The battery is configured to drive a low-power-consumption chip circuit of the terminal to demodulate forward link signals and modulate backward link signals. However, for the backscattering link, the zero-power-consumption terminal performs the backscattering implementation to transmit signals. Therefore, zero power consumption of this type of terminals is mainly reflected in the fact that transmitting the backward link signals does not consume the power of the terminal, but the backscattering implementation is to be performed

The battery that is built in the source-arranged zero-power-consumption terminal supplies power to the RFID chip, such that a reading-writing distance of the electronic label is increased, and reliability of communication is improved. Therefore, this type of terminals can be applied in scenarios where relatively high requirements are needed for communication distances and reading delays.

### (v) Cellular source-free IoT

As 5G industry applications increase, types of connected objects and application scenarios are increasing, and there will be higher requirements for prices and power consumption of communication terminals. Application of battery-free and low-cost power source-free loT devices has become the key technology of the cellular IoT, where types and the number of 5G network-linked terminals are enriched, such that interconnection of all things can be truly achieved. The power source-free IoT devices can be extended, based on the zero-power-consumption communication, such as the RFID technology, to be applied to the cellular loT.

The inventor of the present disclosure has found, after research, that in some application scenarios of the zero-power-consumption communication, such as logistics scenarios, a large number of terminals require to communicate with the network in a short period of time. When resources are not properly controlled and coordinated for the zero-power-consumption terminals, in the case of the large number of the zero-power-consumption terminals sending information to the network at the same time, serious terminal conflicts and signal interference may occur, resulting in the network being unable to correctly demodulate information sent by the zero-power-consumption terminals. Even though in some solutions, the resources are coordinated by the zero-power-consumption terminals randomly falling back, a large number of zero-power-consumption terminals may select a same time and frequency resource to fall back, such that serious conflicts and mutual interference may occur.

Embodiments of the present disclosure provide a solution that is used to solve at least one of the above problems.

In order to be able to understand features and technical contents of the embodiments of the present disclosure, implementation of the embodiments of the present disclosure will be described in detail by referring to the accompanying drawings. The accompanying drawings are for illustrative purposes only and are not limit the embodiments of the present disclosure.

FIG. 7 is a flow chart of a resource configuration method according to an embodiment of the present disclosure. The method may be applied to a network device in the zero-power-consumption communication system, such as the reader/writer in the RFID system, but is not limited thereto. The method includes at least part of the following operations.

In an operation S710, a network device transmits a first signaling. The first signaling is configured to indicate at least one resource configuration. The at least one resource configuration is in one-to-one correspondence with at least one resource set. Each resource set in the at least one resource set includes at least one resource unit for a backward link of the zero-power-consumption communication.

In practice, the network device sends the first signaling to the zero-power-consumption terminal.

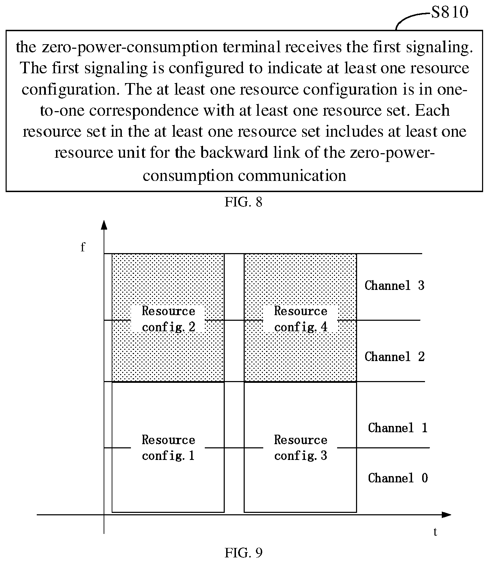

Accordingly, FIG. 8 is a flow chart of a resource configuration method of another embodiment. The method may be applied to the zero-power-consumption terminal in the zero-power-consumption communication system, such as an electronic label in the RFID system, but is not limited thereto. The method includes at least some of the following operations.

In an operation S810, the zero-power-consumption terminal receives the first signaling. The first signaling is configured to indicate at least one resource configuration. The at least one resource configuration is in one-to-one correspondence with at least one resource set. Each resource set in the at least one resource set includes at least one resource unit for the backward link of the zero-power-consumption communication.

In practice, the zero-power-consumption terminal receives the first signaling sent from the network device.

Exemplarily, the resource configuration may refer to configuration information of a resource. In some embodiments, the resource configuration includes one or more informations for indicating a specific location and/or an application attribute of the resource. For example, the resource configuration may include information such as a frequency domain location and a time domain location of the resource. Alternatively, the resource configuration may include a size of a data block corresponding to the resource to represent that the resource may be applied in data transmission corresponding to the size of the data block. Exemplarily, in the present embodiment, the configuration resource takes the resource unit as a unit, and that is, each resource unit is a minimum time-frequency resource for the zero-power-consumption terminal to perform communication. Each resource configuration may be configured to determine at least one resource unit, and that is, each resource configuration corresponds to one resource set, and the resource set includes at least one resource unit.

Exemplarily, as shown in FIG. 9, the first signaling sent by the network device to the terminal device may be configured to indicate four resource configurations, i.e., a resource configuration 1, a resource configuration 2, a resource configuration 3, and a resource configuration 4. FIG. 9 shows an example of the resource set corresponding to each resource configuration occupying two channels and resource sets of all resource configurations having a same time domain length. In practice, the resource sets corresponding to all resource configurations may occupy a same frequency domain width or different frequency domain widths, such as a bandwidth; the same number of channels or different numbers of channels; the same number of physical resource blocks (PRBs) or different numbers of physical resource blocks (PRBs); the same time domain length or different time domain lengths; or the same number of resources or different numbers of resources; or the same resource size or different resource sizes.

In the embodiments of the present disclosure, the resource unit may be used for the backward link, such as for the backscattering communication link, in the zero-power-consumption communication. The backward link may also be referred to as an uplink (UL).

In some embodiments, each resource unit in the at least one resource set described in the above may be available to be used by backward linkes of a large number of zero-power-consumption terminals. For a specific one of the zero-power-consumption terminals, after the operation S810, the method may further include the following operations.

The zero-power-consumption terminal selects, based on the at least one resource configuration, a resource unit from the at least one resource set to perform backward link communication or a resource unit to be used to transmit data.

Exemplarily, the zero-power-consumption terminal may select one resource set from the at least one resource set and denote the selected resource set to be a backward link resource set of the zero-power-consumption terminal and determine one resource unit from the backward link resource set to transmit data.

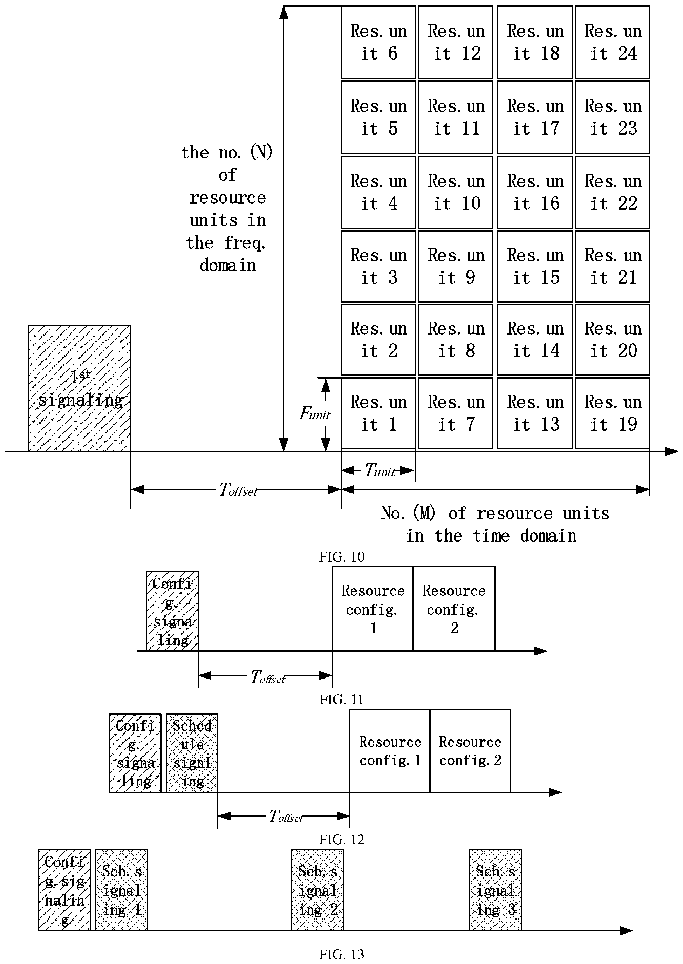

Exemplarily, as shown in FIG. 10, one resource configuration, which is indicated by the network device to the zero-power-consumption terminal via the first signaling, may include a resource unit 1 to a resource unit 24. The 24 resource units in FIG. 10 are configured to be used for the backscattering communication. Therefore, the zero-power-consumption terminal may, after determining to use the resource configuration, select one resource unit from the 24 resource units to transmit data.

According to the resource configuration method described in the above, the network device indicates the at least one resource configuration by sending the first signaling to configure at least one resource set for the zero-power-consumption terminal. In this way, the zero-power-consumption terminal selects, from the configuration resource set, the resource for the backward link, such that a probability of conflict between zero-power-consumption terminals is reduced, and communication between the network device and a large number of zero-power-consumption terminals is completed accurately.

In embodiments of the present disclosure, the resource configuration indicated by the first signaling may include various information about the configuration resource set.

In some embodiments, the resource configuration may include information related the resource units. The resource configuration method may include: the zero-power-consumption terminal determining, based on each resource configuration of the at least one resource configuration, a location of each resource unit in the corresponding resource set.

In some embodiments, the resource configuration may include information for determining whether the resource configuration is applicable to the zero-power-consumption terminal. The resource configuration method may include: the zero-power-consumption terminal selecting, based on the at least one resource configuration, the backward link resource set of the zero-power-consumption terminal from the at least one resource set.

Exemplarily, each resource configuration may include at least one of the following information A to I.

### A. A time domain length of each resource unit in the resource set corresponding to the resource configuration

As shown in FIG. 10, the resource configuration indicated by the first signaling may include the time domain length Tᵤₙᵢₜ for each resource unit.

In some embodiments, a unit of the time domain length is microsecond (µs), millisecond (ms), symbol, or time slot. That is, the time domain length may be expressed as a number of microseconds, a number of milliseconds, a number of occupied symbols, or a number of occupied time slots.

### B. Bandwidth information for each resource unit in the resource set

Exemplarily, the bandwidth information is configured to describe a frequency domain width, i.e., the bandwidth, of the resource unit, such as the Fᵤₙᵢₜ shown in FIG. 10. For example, the bandwidth information may include the number of occupied PRBs and/or a size of the bandwidth.

### C. The number of resource units in the resource set in the time domain

For example, the number may be the number M of resource units on the time domain shown in FIG. 10. In the example of FIG. 10, M=4.

Generally, resources in the resource set may be continuously distributed on the time domain. The continuous distribution enables a resource utilization rate to be improved. In practice, the resources in the resource set may be distributed discontinuously in the time domain.

Exemplarily, in the case where the resource set includes the resource units that are discontinuously distributed in the time domain, the resource configuration further includes distribution of at least one resource unit of the resource set in the time domain. For example, the resource configuration may include a distribution pattern of the all of the resource units.

Exemplarily, the distribution of the resource units in the time domain may be indicated based on information such as a time interval between resource units, a serial number of each resource unit on the time domain, and so on. For example, when the resource unit has a time domain length of 1 ms, the distribution of the resource unit in the time domain may be indicated based on the serial number of the resource unit within a time domain window. For example, the resource unit is distributed at the 3rd ms, the 5th ms, and so on in the time domain window. Alternatively, the distribution of the resource unit may be indicated based on a bit stream, and the bit stream may also be referred to as a bitmap. The bit stream includes a plurality of bits corresponding to a plurality of time domain locations. When a value of a certain bit is 1, it is determined that the resource set includes a resource unit at a time domain corresponding to the certain bit. When a value of a certain bit is 0, it is determined that the resource set does not include the resource unit at a time domain corresponding to the certain bit.

### D. The number of resource units of the resource set in the frequency domain

For example, the number may be the number N of resource units on the frequency domain shown in FIG. 10. In the example of FIG. 10, N=6.

Generally, resources in the resource set may be continuously distributed on the frequency domain. The continuous distribution enables the resource utilization rate to be improved. In practice, the resources in the resource set may be distributed discontinuously in the frequency domain.

Exemplarily, in the case where the resource set includes the resource units that are discontinuously distributed in the frequency domain, the resource configuration further includes distribution of at least one resource unit of the resource set in the frequency domain. For example, the resource configuration may include a distribution pattern of the all of the resource units.

Exemplarily, the distribution of the resource units in the frequency domain may be indicated based on information such as a frequency interval between resource units, a PRB serial number occupied by the resource units, a channel index, or a bit stream.

### E. Time domain location information of the first resource unit in the resource set

Exemplarily, the first resource unit may include all resource units in the resource set, or may include some of the all resource units in the resource set, such as one of the all resource units.

That is, the resource configuration may include time domain location information of all resource units in the corresponding resource set or time domain location information for one certain resource unit of the all resource units in the corresponding resource set. In some embodiments, the time domain location information of the certain resource unit may be configured to determine time domain locations of the all resource units in the resource set.

Exemplarily, the first resource unit may include the resource unit at the earliest time domain location in the resource set, and the resource unit at the earliest time domain location is configured to determine a starting time domain location of the resource set. For example, the first resource unit in FIG. 10 may be one of resource units 1-6. In practice, the first resource unit may include the resource unit at the latest time domain location in the resource set or a particular resource unit at the second time domain location, the third time domain location, or the fourth time domain location in the resource set.

In some embodiments, the time domain location information of the first resource unit may include absolute time location information of the first resource unit and/or a time interval between the first resource unit and the first signaling, such as a time interval T_{offset} between the resource unit 1 and the first signaling in FIG. 10. The time interval may be understood as a relative position of the first resource unit in the time domain with respect to the first signaling.

In practice, when the resource set corresponding to the resource configuration includes a plurality of resource units at a plurality of time domain locations, locations of all resource units in the time domain may be determined based on one resource unit of the plurality of resource units. For example, the time domain location of the resource unit, which is the earliest in time among the plurality of the configuration resource units, is first determined. Further, time domain locations of the remaining resource units are determined based on other information, such as at least one of the number of resource units on the time domain, distribution of each of the resource units, and a time domain length of each of the resource units. Specifically, the operation of the zero-power-consumption terminal determining, based on each of the at least one resource configuration, the location of each resource unit in the corresponding resource set, includes the following.

The zero-power-consumption terminal determines the earliest time domain location occupied by the resource set based on the time domain location information of the first resource unit included in each resource configuration.

The zero-power-consumption terminal determines the locations of all resource units in the resource set based on the earliest time domain location.

### F. Frequency domain location information of a second resource unit in the resource set

Exemplarily, the second resource unit may include all resource units in the resource set or may include some of the all resource units in the resource set, such as one resource unit of the all resource units.

That is, the resource configuration may include frequency domain location information for all resource units in the corresponding resource set or frequency domain location information of a certain resource unit in the corresponding resource set. In some embodiments, the frequency domain location information of the certain resource unit may be configured to determine frequency domain locations of the all resource units in the resource set.

Exemplarily, the second resource unit may include a resource unit at the lowest frequency domain location in the resource set. The resource unit at the lowest frequency domain location is configured to determine a starting frequency domain location of the resource set. For example, the second resource unit in FIG. 10 may be a resource unit 1, a resource unit 7, a resource unit 13, or a resource unit 19. In practice, the second resource unit may include a resource unit at the highest frequency domain location in the resource set or a certain resource unit at the second frequency domain location, the third frequency domain location, or the fourth frequency domain location in the resource set.

In some embodiments, the frequency domain location information of the second resource unit includes at least one of: a serial number of a PRB occupied by the second resource unit, an index of a channel occupied by the second resource unit, and a frequency-domain offset between the second resource unit and the first signaling. The frequency-domain offset may be understood as a relative location of the second resource unit in the frequency domain with respect to the first signaling.

In practice, when the resource set corresponding to the resource configuration includes a plurality of resource units in a plurality of frequency domain locations, distribution of all resource units in the frequency domain may be determined based on one resource unit of the plurality of resource units. For example, a frequency domain location of a resource unit occupying the lowest frequency domain location among the plurality of the configuration resource units is first determined. Further, frequency domain locations of the remaining resource units are determined based on at least one of: the number of resource units in the frequency domain, distribution of the all resource units, and bandwidth information of each resource unit. Specifically, the operation of the zero-power-consumption terminal determining, based on each of the at least one resource configuration, the location of each resource unit in the corresponding resource set, includes the following.

The zero-power-consumption terminal determines, based on the frequency domain location information of the second resource unit included in each resource configuration, the lowest frequency domain location occupied by the resource set.

The zero-power-consumption terminal determines, based on that lowest frequency domain location, the location of each resource unit in the resource set.

Exemplarily, the zero-power-consumption terminal may accurately determine the location of each resource unit based on the time domain location information of the first resource unit and the frequency domain location information of the second resource unit.

Specifically, the operation of the zero-power-consumption terminal determining, based on each of the at least one resource configuration, the location of each resource unit in the corresponding resource set, includes the following.

The zero-power-consumption terminal determines the earliest time domain location and the lowest frequency domain location occupied by the resource set based on the time domain location information of the first resource unit and the frequency domain location information of the second resource unit included in each resource configuration.

The zero-power-consumption terminal determines the location of each resource unit in the resource set based on the earliest time domain location and the lowest frequency domain location.

In some embodiments, the second resource unit may be the same resource unit as the first resource unit, i.e., the first resource unit and the second resource unit refer to the same resource unit in the resource set occupies the earliest time domain location and the lowest frequency domain location, such as the resource unit 1 in FIG. 10. In specific implementation, the zero-power-consumption terminal determines the earliest time domain location and the lowest frequency domain location occupied by the resource set based on the time domain location information and the frequency domain location information of the resource unit; and determines the location of each resource unit in the resource set based on the earliest time domain location and the lowest frequency domain location.

### G. Codeword information corresponding to the resource set

In some embodiments, the codeword information includes information of orthogonal codes and/or non-orthogonal codes.

When the orthogonal or non-orthogonal codes are used on the same resource unit, the available resource set may be extended, such that conflicts among users may be potentially reduced, and a correct probability of data transmission may be improved. For example, even when two users (two zero-power-consumption terminals) select resource units that completely overlap with each other in both the time domain and the frequency domain, the two users may select different codewords, and the network device may receive information from the two users correctly at the same time.

In some embodiments, the codeword information in the resource configuration, such as the information about the orthogonal code or the non-orthogonal code, may include at least one of the following information:
a codeword length;
the number of available codewords; and
an index of the available codewords.

In some embodiments, after the zero-power-consumption terminal selects, from the at least one resource set, the backward link resource set of the zero-power-consumption terminal, the above method further includes the following. The zero-power-consumption terminal determines, based on codeword information corresponding to the backward link resource set, codewords to be used by the zero-power-consumption terminal for backward link communication.

In this way, different zero-power-consumption terminals may send data on the same resource unit based on different codewords, and the network device may correctly receive the data, such that the resource utilization rate is extended.

### H. Transmission attribute information corresponding to the resource set

The zero-power-consumption terminal uses the transmission attribute information to select, from a plurality of resource configurations, a resource configuration to be used by the zero-power-consumption terminal. That is, the zero-power-consumption terminal uses the transmission attribute information to select, from a plurality of resource sets corresponding to the plurality of resource configurations, a resource set to be used by the zero-power-consumption terminal

Accordingly, the operation of the zero-power-consumption terminal selecting, from the at least one resource set, the backward link resource set of the zero-power-consumption terminal based on the at least one resource configuration, includes the following.

The zero-power-consumption terminal selects the backward link resource set of the zero-power-consumption terminal from the at least one resource set based on transmission attribute information corresponding to the at least one resource set.

Exemplarily, the transmission attribute information includes at least one of: a transmission rate, a transport block size (TBS), and a modulation and coding scheme (MCS).

Specifically, for a terminal having different channel conditions, different resources may be configured. Therefore, the resource configuration indicated by the first signaling may include a transmission rate corresponding to the resource, or a TBS corresponding to the resource, or a MCS corresponding to the resource. Accordingly, the zero-power consumption terminal may select, based on the channel conditions, a resource corresponding to the transmission attribute information adapted to the channel conditions. For example, a zero-power consumption terminal having better channel conditions, such as a terminal having a higher signal to noise ratio (SNR) or a higher reference signal receiving power (RSRP), may select a resource unit corresponding to a higher transmission rate or a larger TBS. A zero-power consumption terminal having poor channel conditions may select a resource unit corresponding to a lower transmission rate or a smaller TBS.

### I. Terminal classification information corresponding to the resource set

In the embodiments of the present disclosure, different resource sets may correspond to different terminal classification information. The operation of the zero-power consumption terminal selecting the backward link resource set of the zero-power consumption terminal from the at least one resource set based on the at least one resource configuration, includes the following.

The zero-power consumption terminal selects the backward link resource set for the zero-power consumption terminal from the at least one resource set based on the terminal classification information corresponding to the at least one resource set.

Exemplarily, the terminal may be classified based on a priority level of the terminal. That is, the terminal classification information includes the priority level of the terminal. For example, zero-power consumption terminals having different priority levels may adopt resource units in different resource sets. Therefore, the resource configuration may include priority information corresponding to the resource set. The zero-power consumption terminal may select a resource unit in the corresponding resource set based on the priority level of the zero-power consumption terminal.

It can be seen that the resource configuration indicated by the first signaling may include information for determining respective resource units in the resource set, such as the above-mentioned information A-F. The resource configuration may further include the information of the codewords used for the backward link communication based on the resource set, such as the above-mentioned information G.

In some embodiments, all or some of parameters of the at least one resource set are different. That is, in different resource configurations, some or all of the parameters of the corresponding resource units are different, for example, the corresponding resource units may have different time domain lengths, or different frequency domain configurations, or different transmission rates. As illustrated in the above, in some embodiments, different resource configurations may correspond to different transmission attributes and different terminal types. By indicating different resource configurations, the resource set configured with different parameters may be achieved, such that different demands of various terminals (such as different channel conditions, different transmission rates, and so on) may be met.

In some embodiments, after the terminal selects the backward link resources for the terminal its own according to different demands, the above method further includes the following. The zero-power consumption terminal selects, from the backward link resource set, a resource unit used for the zero-power-consumption terminal to perform backward link communication.

In some embodiments, the zero-power-consumption terminal may randomly select, from the backward link resource set, the resource unit used for the zero-power-consumption terminal to perform the backward link communication. Since various zero-power-consumption terminals randomly select respective resource units, a plurality of zero-power-consumption terminals adopting a same resource set may use the resource units dispersedly, preventing communication conflicts and interference.

In practice, embodiments of the present disclosure further provide some first signaling implementation methods.

In an embodiment, the first signaling includes a system message. That is, the resource configuration is indicated by the system message. The system message may carry a relatively large amount of configuration information and broadcast the large amount of configuration information to all users (zero-power-consumption terminals) in the cell.

Since some zero-power-consumption terminals, such as power source-free zero-power-consumption terminals, do not use energy storage units such as batteries, even when the zero-power-consumption terminals receive the information sent in the system message to indicate the resource configuration, the zero-power-consumption terminals are unable to store the information for a long period of time. When a conventional system message, which is sent periodically, is used to carry the resource configuration information, the resource configuration information carried by the system message may be lost instantly at the time when the zero-power-consumption terminal loses wireless power supply. To solve the problem, the network device sends the first signaling to the zero-power-consumption terminal before the terminal performs the backscattering communication.

In an embodiment, the first signaling includes a configuration signaling for triggering the backward link communication. That is, the first signaling is used to trigger the zero-power-consumption terminal to perform the backward link communication or to trigger the zero-power-consumption terminal to perform data transmission. The resource configuration is indicated at the time point when the zero-power-consumption terminal is triggered to perform the data transmission.

Accordingly, the resource configuration method further includes: in response to receiving the configuration signaling, the zero-power-consumption terminal performing the backward link communication.

In some embodiments, the operation of the zero-power-consumption terminal performing the backward link communication in response to receiving the configuration signaling may include the following. In response to receiving the configuration signaling, the zero-power-consumption terminal performs the backward link communication based on the resource unit selected from the at least one resource set.

Exemplarily, the zero-power-consumption terminal may, after receiving the configuration signaling, select the resource unit from the at least one resource set corresponding to the at least one resource configuration, based on the above examples (such as firstly selecting the backward link resource set of the zero-power-consumption terminal, and then randomly selecting the resource unit for the zero-power-consumption terminal to perform the backward link communication from the backward link resource set); perform the backward link communication based on the selected resource unit. The backward link communication is a response for the configuration signaling.

Exemplarily, as shown in FIG. 11, the network device sends the configuration signaling to the zero-power-consumption terminal to indicate the resource configuration 1 and the resource configuration 2 and to trigger the zero-power-consumption terminal to perform data transmission. The zero-power-consumption terminal determines, after receiving the configuration signaling, a resource configuration that can be selected. Taking the resource configuration 1 as an example, the resource configuration 1 may include a time interval T_{offset} between the first resource unit in the corresponding resource set and the configuration signaling. The resource configuration 1 may further include information such as distribution of all resource units of the resource set in the time domain and in the frequency domain and/or the number of resource units in the resource set. The resource configuration 2 may include information similar to the resource configuration 1. Further, the zero-power-consumption terminal selects one from the resource configuration 1 and the resource configuration 2. The zero-power-consumption terminal determines a location of each resource unit of the resource set corresponding to the selected resource configuration, based on the T_{offset}, distribution characteristics of all resource units, the number of resource units. In this way, the zero-power-consumption terminal, after selecting the resource unit from the selected resource set, may perform data transmission based on the resource unit.

In some embodiments, the zero-power-consumption terminal may select a corresponding resource configuration based on its own situation, such as channel conditions, a priority level of a service, and so on; and select a resource unit from the resource set corresponding to the selected resource configuration to perform data transmission. When the resource set corresponding to the resource configuration, which is selected by the terminal based on its own situation, includes a plurality of resource units, the terminal may randomly select one resource unit. When each resource unit further includes a plurality of available codewords, the terminal randomly may select one codeword to perform data transmission.

In another example, the first signaling includes the configuration signaling and at least one scheduling signaling. The configuration signaling is configured to indicate a first portion of parameters of the at least one resource configuration. Each of the at least one scheduling signaling is configured to indicate a second portion of parameters of some or all of the at least one resource configuration and to trigger the backward link communication.

In practice, the operation of the network device sending the first signaling to the zero-power-consumption terminal, includes the following. The network device, after sending the configuration signaling to the zero-power-consumption terminal, further sends at least one scheduling signaling to the zero-power-consumption terminal.

Accordingly, the operation of the zero-power-consumption terminal receiving the first signaling sent by the network device, includes the following. The zero-power-consumption terminal, after receiving the configuration signaling sent by the network device, further receives the scheduling signaling sent by the network device.

In some embodiments, the above method may further include the following. In response to receiving the scheduling signaling, the zero-power-consumption terminal performs the backward link communication. Exemplarily, in response to receiving the configuration signaling, the zero-power-consumption terminal performs the backward link communication based on the resource unit selected from the at least one resource set.

That is, the network device, before triggering the zero-power-consumption terminal to perform data transmission, sends the configuration signaling to configure the first portion of parameters of the at least one resource configuration. Further, the network device sends the scheduling signaling to trigger the zero-power-consumption terminal to perform data transmission. The scheduling signaling may indicate the second portion of parameters of some or all resource configurations.

Accordingly, the zero-power-consumption terminal may, after receiving the scheduling signal, accurately determine the at least one resource configuration based on combination of the configuration signaling and the scheduling signaling; select the resource unit from the at least one resource set corresponding to the at least one resource configuration based on the above examples (such as, firstly selecting the backward link resource set of the zero-power-consumption terminal, and then selecting the resource unit randomly from the backward link resource set for the zero-power-consumption terminal to perform the backward link communication); and perform the backward link communication based on the selected resource unit. The backward link communication is a response for the scheduling signaling.

By combining the two signalings, the configuration signaling can be used to carry more configuration informations, flexibility of scheduling may be improved due to flexibility and variability of the scheduling signaling.

In some embodiments, the first portion of parameters may be different from the second portion of parameters.

For example, the first portion of parameters may include at least one of the above-mentioned information A-I, such as the time domain length of each resource unit in the resource set, the bandwidth information of each resource unit, the number of resource units of the resource set in the time domain, the number of resource units in the frequency domain, and so on. The second portion of parameters may include other parameters in the above-mentioned information of A-I, such as the time domain location of the first resource unit in the resource set, the frequency domain location of the second resource unit, and transmission attribute information corresponding to the resource set. That is, the network device may indicate some basic parameters of each resource set based on the configuration signaling. Subsequently, the network device instructs the zero-power-consumption terminal to perform data transmission based on the scheduling signaling; and configures other parameters such as the starting time domain location and the starting frequency domain location in the resource set.

In some embodiments, the second portion of parameters may include at least one of the following information:
the number of resource units of the resource set in the time domain;
the number of resource units of the resource set in the frequency domain;
the time domain location of the first resource unit in the resource set;
the frequency domain location of the second resource unit in the resource set;
transmission attribute information corresponding to the resource set.

In some embodiments, after sending the configuration signaling, the network device may trigger, based on the configuration signaling, the zero-power-consumption terminal to perform data transmissions for once or a plurality of times, i.e., the network device sends one or more scheduling signalings.

For example, as shown in FIG. 12, each configuration signaling corresponds to one scheduling signaling. The network device firstly sends the configuration signaling to indicate some of the parameters in the resource configuration 1 and the resource configuration 2; and then sends the scheduling signaling to indicate other parameters in the resource configuration 1 and the resource configuration 2, such as the time interval T_{offset} and/or the TBS as shown in FIG. 12 (if the configuration signaling does not include these information). In this way, the zero-power-consumption terminal may accurately determine the resource configuration, based on the received configuration signaling and the scheduling signaling, to select the appropriate resource unit for data transmission.

As another example, as shown in FIG. 13, each configuration signaling corresponds to a plurality of scheduling signalings, i.e., one configuration signaling may be followed by a plurality of scheduling signalings at a plurality of time locations to perform scheduling for a plurality of times. Three scheduling signalings are used as shown in FIG. 13, and in practice, other numbers of scheduling signalings may be available.

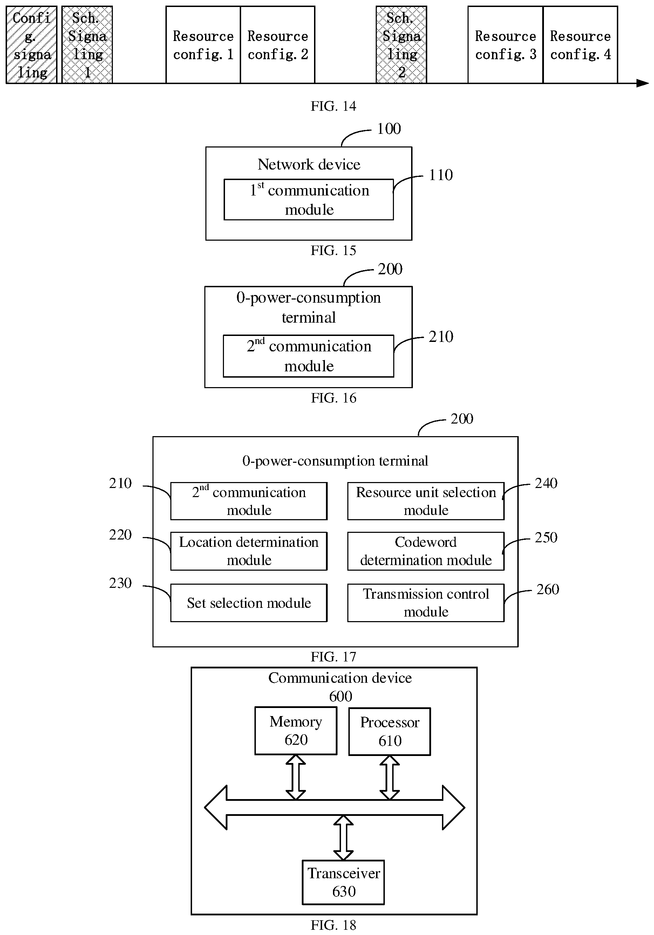

In an example, as shown in FIG. 14, the network device may firstly send the configuration signaling to indicate some parameters in the resource configuration 1, the resource configuration 2, the resource configuration 3, and the resource configuration 4, such as the time domain length, the bandwidth information, the number of resource units, and so on. Further, the network device sends a scheduling signaling 1 and a scheduling signaling 2 successively. The scheduling signaling 1 indicates other parameters in the resource configuration 1 and the resource configuration 2. The zero-power-consumption terminal determines the exact resource configuration 1 and the resource configuration 2 based on the received configuration signaling and the scheduling signaling 1; and performs data transmission for once based on the resource corresponding to the resource configuration 1 or the resource configuration 2. The scheduling signaling 2 indicates other parameters in the resource configuration 3 and the resource configuration 4. The zero-power-consumption terminal determines the accurate resource configuration 3 and the resource configuration 4 based on the received configuration signaling and the scheduling signaling 2; and performs data transmission for a second time based on the resource corresponding to the resource configuration 3 or the resource configuration 4.

To be noted that all configuration signalings may indicate the same number or different numbers of resource configurations. For example, in the specific example described above, the scheduling signaling 1 may indicate only a part of the parameters of the resource configuration 1 to trigger the zero-power-consumption terminal to perform data transmission based on the resource configuration 1. The scheduling signaling 2 may also indicate a part of the parameters of the resource configuration 2, the resource configuration 3, and the resource configuration 4 to trigger the zero-power-consumption terminal to perform data transmission based on the resource configuration 2, the resource configuration 3, or the resource configuration 4.

In some embodiments, the first signaling may further be configured to indicate transmission control information. The zero-power-consumption terminal may use the transmission control information to determine whether to perform the backward link communication based on the resource unit selected from the at least one resource set. That is, the resource configuration method further includes the following. The zero-power-consumption terminal determines, based on the transmission control information, whether to perform the backward link communication based on the resource unit selected from the at least one resource set. That is, the transmission control information may be configured to instruct the zero-power-consumption terminal to determine whether to communicate with the network device.

When the number of zero-power-consumption terminals is large and all of the zero-power-consumption terminals send data at the same time, serious user conflict may be caused. In the present disclosure, the transmission control information may be indicated by signaling to control access of the terminals, such that different terminals send data in a time-ordered manner to alleviate or solve the conflict and improve transmission performance of the system.

In some embodiments, the transmission control information may be indicated based on the configuration signaling. For example, in a scenario shown in FIG. 11, the first signaling includes the configuration signaling, and the configuration signaling is configured to indicate the transmission control information. In another example, in a scenario as shown in FIG. 12, FIG. 13, or FIG. 14, the first signaling may include the configuration signaling and the scheduling signaling, and the configuration signaling is also configured to indicate the transmission control information.

In some embodiments, the transmission control information may be indicated based on the scheduling signaling. For example, in a scenario as shown in FIG. 12, FIG. 13, or FIG. 14, the first signaling may include the configuration signaling and the scheduling signaling, and the scheduling signaling may be configured to indicate the transmission control information. The corresponding transmission control information of each backward link communication may be indicated based on each scheduling signaling, such that transmission control may be more flexible.

Exemplarily, the transmission control information may include at least one of the following information (1)-(3).

### (1) An access level of the terminal that is allowed to communicate with the network device

In some embodiments, only a terminal that satisfies a certain access level is allowed to send data. Specifically, the operation of the zero-power-consumption terminal determining, based on the transmission control information, whether to perform the backward link communication based on the resource unit selected from the at least one resource set, includes the following.

In a case where the access level of the zero-power-consumption terminal matches the access level in the transmission control information, the zero-power-consumption terminal determines to perform the backward link communication based on the resource unit selected from the at least one resource set.

In some application scenarios, the access level of the zero-power-consumption terminal matching with the access level in the transmission control information means that the access level of the zero-power-consumption terminal is the same as the access level in the transmission control information. In other application scenarios, the access level of the zero-power-consumption consumption terminal matching with the access level in the transmission control information means that the access level of the zero-power-consumption terminal is higher than or equal to the access level in the transmission control information.

For example, there are five access levels for a terminal, and the five access levels are an access level 1, an access level 2, an access level 3, an access level 4 and an access level 5. A lower value of the access level indicates a higher access level. In a case where the transmission control information includes the access level 2, only the terminal having the access level 2 can send data, and other terminals cannot send data. Alternatively, in a case where the transmission control information includes the access level 2, a terminal having the access level 1 and a terminal having the access level 2 can send data, and other terminals cannot send data.

### (2) Type information of the terminal that is allowed to communicate with the network device

In some embodiments, only the terminal having a corresponding type can send data. Specifically, the operation of the zero-power-consumption terminal determining, based on the transmission control information, whether to perform the backward link communication based on the resource unit selected from the at least one resource set, includes the following. In a case where a type of the zero-power-consumption terminal matches the type information in the transmission control information, the zero-power-consumption terminal determines to perform the backward link communication based on the resource unit selected from the at least one resource set.

In some embodiments, in practice, the type of the zero-power-consumption terminal matching with the type information in the transmission control information means that the type of the zero-power-consumption terminal is the same as the type information in the transmission control information.

For example, according to the business of the terminal, the terminal may be classified as a monitoring class, a control class, a labelling class, and the like. In a case that the transmission control information includes the monitoring class, only the terminal of the monitoring class can send data, and other terminals cannot send data.

### (3) Access probability

Exemplarily, the access probability is a probability of terminals that can send data. For example, when the access probability is 20%, it means that only 20% of the terminals can send data after receiving the first signaling.

In some embodiments, the operation of the zero-power-consumption terminal determining, based on the transmission control information, whether to perform the backward link communication based on the resource unit selected from the at least one resource set, includes the following.

The zero-power-consumption generates a random number, and determines, in response to the random number being less than or equal to the access probability in the transmission control information, to perform the backward link communication based on the resource unit selected from the at least one resource set.

For example, when the access probability is 20%, the terminal generates a random number in an interval of [0,1]. When the generated random number is greater than 0.2, the terminal cannot send data; when the generated random number is less than or equal to 0.2, the terminal can send data.

In the above, specific settings and implementations of the embodiments of the present disclosure are described based on various embodiments from different perspectives. Based on at least one of the above embodiments, the network device indicates resource configuration by sending the first signaling, such that the configuration resource set is achieved, and the zero-power-consumption terminal can select the resource from at least one resource unit in the configuration resource set. In this way, a probability of conflict between zero-power-consumption terminals is reduced, and communication between the network device and a large number of zero-power-consumption terminals can be completed accurately. Further, by configuring different parameters of the different resource sets, different needs (such as different channels, different transmission rates) of different terminals can be satisfied. Based on the access control method, the number of terminals performing data transmission at the same time can be effectively controlled, such that the user conflict is reduced, and system performance is improved.

Corresponding to the processing method of at least one embodiment described above, the present disclosure further provides a network device 100, as shown in FIG. 15, the network device 100 includes the following.

A first communication module 110 is configured to send the first signaling.

The first signaling is configured to indicate at least one resource configuration. The at least one resource configuration and the at least one resource set is in one-to-one correspondence with each other. Each resource set of the at least one resource set includes at least one resource unit for the backward link for zero-power-consumption communication.

In some embodiments, the backward link includes a backscattering communication link.

In some embodiments, in the present embodiment, each of the at least one resource configuration includes at least one of the following information:
a time domain length of each resource unit in the resource set corresponding to the resource configuration;
bandwidth information for each resource unit in the resource set;
the number of resource units of the resource set in the time domain;
the number of resource units of the resource set in the frequency domain;
time domain location information of a first resource unit in the resource set;
frequency domain location information of a second resource unit in the resource set;
codeword information corresponding to the resource set;
transmission attribute information corresponding to the resource set; and
terminal classification information corresponding to the resource set.

In some embodiments, in the present embodiment, a unit of the time domain length is microsecond, millisecond, symbol, or time slot.

In some embodiments, in the present embodiment, the bandwidth information includes the number of occupied physical resource blocks (PRBs) and/or a bandwidth size.

In some embodiments, in the present embodiment, when the resource set includes resource units that are distributed discontinuously in the time domain, the resource configuration further includes distribution of the at least one resource unit of the resource set in the time domain.

In some embodiments, in the present embodiment, when the resource set includes resource units that are discontinuously distributed in the frequency domain, the resource configuration further includes distribution of the at least one resource unit of the resource set in the frequency domain.

In some embodiments, in the present embodiment, the first resource unit includes a resource unit in the resource set located at the earliest time domain location.

In some embodiments, in the present embodiment, the time domain location information of the first resource unit includes absolute time location information of the first resource unit and/or a time interval between the first resource unit and the first signaling.

In some embodiments, in the present embodiment, the second resource unit includes a resource unit of the resource set located at the lowest frequency domain location.

In some embodiments, in the present embodiment, the frequency domain location information of the second resource unit includes at least one of a serial number of the PRB occupied by the second resource unit, an index of a channel occupied by the second resource unit, and a frequency offset between the second resource unit and the first signaling.

In some embodiments, in the present embodiment, the codeword information includes orthogonal code information and/or non-orthogonal code information.

In some embodiments, in the present embodiment, the codeword information includes at least one of a code length, the number of codewords that can be used, and an index of the codewords that can be used.

In some embodiments, in the present embodiment, the transmission attribute information includes at least one of a transmission rate, a data block size, and a modulation coding level.

In some embodiments, in the present embodiment, the terminal classification information includes a priority level of the terminal.

In some embodiments, in the present embodiment, all or part of parameters of the at least one resource set may be different from each other.

In some embodiments, in the present embodiment, the first signaling includes a system message.

In some embodiments, in the present embodiment, the first signaling includes a configuration signaling for triggering the backward link communication.

In some embodiments, in the present embodiment, the first signaling includes the configuration signaling and at least one scheduling signaling.

The configuration signaling is configured to indicate a first portion of parameters of the at least one resource configuration.

Each of the at least one scheduling signaling is configured to indicate a second portion of parameters of some or all of the resource configuration of the at least one resource configuration and to trigger the backward link communication.

In some embodiments, in the present embodiment, the first communication module 110 is specifically configured to:
send the at least one scheduling signaling after sending the configuration signaling.

In some embodiments, in the present embodiment, the second portion of parameters includes at least one of the following information:
the number of resource units of the resource set corresponding to the resource configuration in the time domain;
the number of resource units of the resource set in the frequency domain;
a time domain location of the first resource unit of the resource set;
a frequency domain location of the second resource unit of the resource set;
transmission attribute information corresponding to the resource set.

In some embodiments, in the present embodiment, the first signaling is further configured to indicate transmission control information.

In some embodiments, in the present embodiment, the transmission control information includes at least one of the following information: an access level of a terminal that is allowed to communicate with the network device; type information of the terminal that is allowed to communicate with the network device; and an access probability.

The network device 100 in the present embodiment can perform corresponding functions of the network device in the above method embodiments. Processes, functions, implementation methods, and beneficial effects corresponding to various modules (sub-modules, units or components) in the network device 100 may be referred to the corresponding descriptions in the aforementioned method embodiments, and will not be repeated herein. To be noted that functions described for each module (sub-module, unit or component) in the network device 100 of the embodiment of the present disclosure may be achieved by different modules (sub-modules, units or components), or may be achieved by the same module (sub-module, unit or component). For example, a first transmitting module and a second transmitting module may be different modules or a same module, each of the first transmitting module and the second transmitting module can achieve corresponding functions in the embodiments of the present disclosure. In addition, the communication module in the embodiment of the present disclosure may be achieved as a transceiver of the device, and some or all of the remaining modules may be achieved as a processor of the device.

FIG. 16 is a schematic view of a zero-power-consumption terminal 200 according to an embodiment of the present disclosure. The zero-power-consumption terminal 200 includes the following.

A second communication module 210 is configured to receive the first signaling.

The first signaling is configured to indicate at least one resource configuration. The at least one resource configuration and the at least one resource set is in one-to-one correspondence with each other. Each resource set of the at least one resource set includes at least one resource unit for the backward link for zero-power-consumption communication.

In some embodiments, each of the at least one resource configuration includes at least one of the following information:
a time domain length of each resource unit in the resource set corresponding to the resource configuration;
bandwidth information of each resource unit in the resource set;
the number of resource units of the resource set in the time domain;
the number of resource units of the resource set in the frequency domain;
time domain location information of a first resource unit in the resource set;
frequency domain location information of a second resource unit in the resource set;
codeword information corresponding to the resource set;
transmission attribute information corresponding to the resource set; and
terminal classification information corresponding to the resource set.

In some embodiments, as shown in FIG. 17, the zero-power-consumption terminal further includes the following.

A location determination module 220 is configured to determine, based on each of the at least one resource configuration, a location of each resource unit in the resource set corresponding the resource configuration.

In some embodiments, the location determination module 220 is specifically configured to:
determine the earliest time domain location and/or the lowest frequency domain location occupied by the resource set based on the time domain location information of the first resource unit and/or the frequency domain location information of the second resource unit included in each resource configuration; and
determine a location of each resource unit in the resource set based on the earliest time domain location and/or the lowest frequency domain location.

In some embodiments, the zero-power-consumption terminal further includes the following.

The set selection module 230 is configured to select a backward link resource set for the zero-power-consumption terminal from the at least one resource set based on the at least one resource configuration.

In some embodiments, the set selection module 230 is specifically configured to:
select the backward link resource set of the zero-power-consumption terminal from the at least one resource set based on the transmission attribute information corresponding to the at least one resource set.

In some embodiments, the set selection module 230 is specifically configured to:
select the backward link resource set for the zero-power-consumption terminal from the at least one resource set according to the terminal classification information corresponding to the at least one resource set.

In some embodiments, the zero-power-consumption terminal further includes the following.

A resource unit selection module 240 is configured to select, from the backward link resource set, a resource unit for the backward link communication for the zero-power-consumption terminal.

In some embodiments, the resource unit selection module 240 is specifically configured to:
Randomly select, from the backward link resource set, a resource unit used by the zero-power-consumption terminal to perform the backward link communication.

In some embodiments, the zero-power-consumption terminal further includes the following.

A codeword determination module 250 is configured to determine a codeword to be used by the zero-power-consumption terminal to perform the backward link communication based on the codeword information corresponding to the backward link resource set.

In some embodiments, the first signaling includes a configuration signaling.

The second communication module 210 is further configured to:
perform the backward link communication in response to receiving the configuration signaling.

In some embodiments, the second communication module 210 is specifically configured to:

Perform the backward link communication based on the resource unit selected from the at least one resource set, in response to receiving the configuration signaling.

In some embodiments, the first signaling includes a configuration signaling and at least one scheduling signaling. The configuration signaling is configured to indicate a first portion of parameters of the at least one resource configuration. Each of the at least one scheduling signaling is configured to indicate a second portion of parameters of some or all of the resource configuration of the at least one resource configuration.

The second communication module 210 is further configured to:
Perform backward link communication in response to receiving the scheduling signaling.

In some embodiments, the second communication module 210 is specifically configured to:

Perform the backward link communication based on the resource unit selected from the at least one resource set in response to receiving the configuration signaling.

In some embodiments, the second communication module 210 is specifically configured to:

Receive the at least one scheduling signaling after receiving the configuration signaling.

In some embodiments, the first signaling is further configured to indicate transmission control information.

The zero-power-consumption terminal further includes the following.

The transmission control module 260 is configured to determine, based on the transmission control information, whether to perform backward link communication based on the resource unit selected from the at least one resource set.

In some embodiments, the transmission control module 260 is specifically configured to:
Determine, in response to the access level of the zero-power-consumption terminal matching with the access level in the transmission control information, to perform backward link communication based on the resource unit selected from the at least one resource set.

In some embodiments, the transmission control module 260 is specifically configured to:
Determine, in response to the type of the zero-power-consumption terminal matching with the type information in the transmission control information, to perform the backward link communication based on the resource unit selected from the at least one resource set.

In some embodiments, the transmission control module 260 is specifically configured to:
Generate a random number and determine, in response to the random number being less than or equal to the access probability in the transmission control information, to perform the backward link communication based on the resource unit selected from the at least one resource set.

The zero-power-consumption terminal 200 in the present embodiment can perform corresponding functions of the zero-power-consumption terminal in the above method embodiments. Processes, functions, implementation methods, and beneficial effects corresponding to various modules (sub-modules, units or components) in the zero-power-consumption terminal 200 may be referred to the corresponding descriptions in the aforementioned method embodiments, and will not be repeated herein. To be noted that functions described for each module (sub-module, unit or component) in the zero-power-consumption terminal 200 of the embodiment of the present disclosure may be achieved by different modules (sub-modules, units or components), or may be achieved by the same module (sub-module, unit or component). For example, a set selection module and a unit selection module may be different modules or a same module, each of the set selection module and the unit selection module can achieve corresponding functions in the embodiments of the present disclosure. In addition, the communication module in the embodiment of the present disclosure may be achieved as a transceiver of the device, and some or all of the remaining modules may be achieved as a processor of the device.

FIG. 18 is a structural schematic view of a communication device 600 according to an embodiment of the present disclosure. The communication device 600 includes a processor 610. The processor 610 may invoke and run a computer program from the memory to implement the method in the method embodiments.

In some embodiments, the communication device 600 may further include a memory 620. The processor 610 may invoke and run the computer program from the memory 620 to implement the method in the embodiments.

The memory 620 may be an independent device separated from the processor 610 or may be integrated into the processor 610.

In some embodiments, the communication device 600 may further include a transceiver 630. The transceiver 630 may be controlled by the processor 610 to communicate with other devices. Specifically, transceiver 630 may send information or data to other devices, or receive information or data sent by other devices.

The transceiver 630 may include a transmitter and a receiver. The transceiver 630 may further include an antenna, and the number of antennas may be one or more.

In some embodiments, the communication device 600 may be the network device of the present disclosure, and the communication device 600 may achieve corresponding processes performed by the network device in various methods of the embodiments of the present disclosure, which will not be repeated herein.

In some embodiments, the communication device 600 may be a terminal device of the present disclosure. The communication device 600 may achieve corresponding processes performed by the terminal device in various methods of the present disclosure, which are not repeated herein.

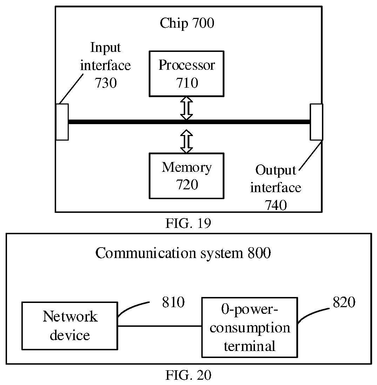

FIG. 19 is a structural schematic view of a chip 700 according to an embodiment of the present disclosure. The chip 700 includes a processor 710. The processor 710 may invoke and run a computer program from a memory to implement the method in the above embodiments.

In some embodiments, the chip 700 may further include a memory 720. The processor 710 may invoke and run the computer program from the memory 720 to implement the method in the present embodiments.

The memory 720 may be an independent device separated from the processor 710 or may be integrated into the processor 710.

In some embodiments, the chip 700 may further include an input interface 730. The processor 710 may control the input interface 730 to communicate with other devices or chips to specifically obtain information or data sent by other devices or chips.

In some embodiments, the chip 700 may further include an output interface 740. The processor 710 may control the output interface 740 to communicate with other devices or chips to specifically output information or data to other devices or chips.

In some embodiments, the chip may be applied to the network device in the embodiments of the present disclosure. The chip may perform the corresponding processes performed by the network device in the various methods of the embodiments, which will not be repeated herein.

In some embodiments, the chip may be applied to a terminal device in the embodiments of the present disclosure, and the chip may perform the corresponding processes performed by the terminal device in the various methods of the embodiments, which are not repeated herein.

To be understood that the chip referred to in the embodiments of the present disclosure may be referred to as a system-on-chip, a system chip, a chip system or a chip of the system, and the like.

The processor in the above may be a general purpose processor, a digital signal processor (DSP), a field programmable gate array (FPGA), an application specific integrated circuit (ASIC), or other programmable logic devices, transistor logic devices, discrete hardware components, and the like. The general-purpose processor mentioned above may be a microprocessor or may also be any conventional processor.

The memory in the above may be a volatile memory or a non-volatile memory or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM, EEPROM), or any conventional processor. The volatile memory can be a random access memory (RAM).

To be understood that the above memories are exemplary but not for limitation. For example, the memories in the embodiments may be a static random access memory (SRAM), a dynamic random access memory (DRAM), a synchronous DRAM (SDRAM), a double data rate SDRAM (DDR SDRAM), an enhanced SDRAM (ESDRAM), a synch-link DRAM (SLDRAM), and a direct rambus random access memory (DR RAM). That is, the memory in the embodiments of the present disclosure is intended to include, but is not limited to, these and any other suitable types of memories.

FIG. 20 is a schematic block diagram of a communication system 800 including a network device 810 and a zero-power-consumption terminal 820, according to an embodiment of the present disclosure.

The network device 810 is configured to send a first signaling.

The zero-power-consumption terminal 820 is configured to receive the first signaling.

The first signaling is configured to indicate at least one resource configuration, the at least one resource configuration and the at least one resource set are in one-to-one correspondence with each other. Each resource set in the at least one resource set includes at least one resource unit for the zero-power-consumption terminal to perform backward link communication.

The terminal device 810 may be configured to implement corresponding functions implemented by the terminal device in the methods of the various embodiments of the present disclosure. The network device 820 may be configured to implement corresponding functions implemented by the network device in the methods of the various embodiments of the present disclosure. For brevity, no further details are provided herein.

The above embodiments may be implemented in whole or in part by software, hardware, firmware, or any combination thereof. When implemented using software, the above embodiments may be implemented, in whole or in part, in the form of a computer program product. The computer program product includes one or more computer instructions. When loaded and executed on a computer, the computer program instructions produce, in whole or in part, a process or function in accordance with embodiments of the present disclosure. The computer may be a general-purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted from one website, one computer, one server, or one data center to another website, another computer, another server, or another data center by wires (such as coaxial cables, optical fibres, digital subscriber lines (DSL)) or by wireless manners (such as infrared, wireless, microwave, and so on). The computer-readable storage medium may be any available medium to which a computer has access or a data storage device such as a server and a data center that contains one or more available integrated media. The available medium may be a magnetic medium (such as floppy disk, a hard drive, a tape), an optical medium (such as DVD), or a semiconductor medium (such as a solid state disk (SSD)), and so on.

It should be understood that in the various embodiments of the present disclosure, magnitude of the serial numbers of the above-described processes does not imply the order of performing the processes. The order of performing the processes should be determined by their functions and inherent logic without constituting any limitation of the process of implementation of the embodiments of the present disclosure.

It may be clearly understood by any ordinary skilled person in the art that, for convenience and conciseness of the description, specific operating processes of the above-described systems, apparatuses, and units may be referred to the corresponding processes in the foregoing embodiments of the method, and will not be repeated herein.

The above are only specific embodiments of the present disclosure, but the scope of the present disclosure is not limited thereto. Any changes or substitutions that can be readily obtained by any ordinary skilled person in the art shall be covered within the scope of the present disclosure. Therefore, the scope of the present disclosure shall be subject to the scope of the claims.

## Claims

1. A resource configuration method, comprising:
sending, by a network device, a first signaling;
wherein the first signaling is configured to indicate at least one resource configuration; the at least one resource configuration and at least one resource set is in one-to-one correspondence with each other; each resource set of the at least one resource set comprises at least one resource unit for a backward link for zero-power-consumption communication.

2. The resource configuration method according to claim 1, wherein, the backward link comprises a backscattering communication link.

3. The resource configuration method according to claim 1 or 2, wherein each resource configuration of the at least one resource configuration comprises at least one of:
a time domain length of each resource unit in a resource set corresponding to the each resource configuration;
bandwidth information of the each resource unit in the resource set;
the number of resource units in the resource set in a time domain;
the number of resource units in the resource set in a frequency domain;
time domain location information of a first resource unit in the resource set;
frequency domain location information of a second resource unit in the resource set;
codeword information corresponding to the resource set;
transmission attribute information corresponding to the resource set; and
terminal classification information corresponding to the resource set.

4. The resource configuration method according to claim 3, wherein, a unit of the time domain length is microsecond, millisecond, symbol, or time slot.

5. The resource configuration method according to claim 3 or 4, wherein the bandwidth information comprises the number of occupied physical resource blocks (PRBs) and/or a bandwidth size.

6. The resource configuration method according to any one of claims 3 to 5, wherein in response to the resource set comprising resource units that are distributed discontinuously in the time domain, the each resource configuration further comprises distribution of at least one resource unit in the resource set in the time domain.

7. The resource configuration method according to any one of claims 3 to 6, wherein in response to the resource set comprising resource units that are discontinuously distributed in the frequency domain, the each resource configuration further comprises distribution of at least one resource unit in the resource set in the frequency domain.

8. The resource configuration method according to any one of claims 3 to 7, wherein the first resource unit comprises a resource unit that is located at the earliest time domain location in the resource set.

9. The resource configuration method according to any one of claims 3 to 8, wherein the time domain location information of the first resource unit comprises absolute time location information of the first resource unit and/or a time interval between the first resource unit and the first signaling.

10. The resource configuration method according to any one of claims 3 to 9, wherein the second resource unit comprises a resource unit that is located at the lowest frequency domain location in the resource set.

11. The resource configuration method according to any one of claims 3 to 10, wherein the frequency domain location information of the second resource unit comprises at least one of: a serial number of a PRB occupied by the second resource unit, an index of a channel occupied by the second resource unit, and a frequency offset between the second resource unit and the first signaling.

12. The resource configuration method according to any one of claims 3 to 11, wherein the codeword information comprises orthogonal code information and/or non-orthogonal code information.

13. The resource configuration method according to any one of claims 3 to 12, wherein the codeword information comprises at least one of: a length of codewords, the number of available codewords, and an index of the available codewords.

14. The resource configuration method according to any one of claims 3 to 13, wherein the transmission attribute information comprises at least one of: a transmission rate, a data block size, and a modulation coding level.

15. The resource configuration method according to any one of claims 3 to 14, wherein the terminal classification information comprises a priority level of a terminal.

16. The resource configuration method according to any one of claims 1 to 15, wherein all or part of parameters of the at least one resource set are different from each other.

17. The resource configuration method according to any one of claims 1 to 16, wherein the first signaling comprises a system message.

18. The resource configuration method according to any one of claims 1 to 16, wherein the first signaling comprises a configuration signaling configured to trigger backward link communication.

19. The resource configuration method according to any one of claims 1 to 16, wherein the first signaling comprises:
a configuration signaling, configured to indicate a first portion of parameters of the at least one resource configuration; and
at least one scheduling signaling, each scheduling signaling of the at least one scheduling signaling being configured to indicate a second portion of parameters of part or all of the at least one resource configuration and to trigger backward link communication.

20. The resource configuration method according to claim 19, wherein the sending a first signaling, comprises:
sending, by the network device, the at least one scheduling signaling after sending the configuration signaling.

21. The resource configuration method according to claim 19 or 20, wherein the second portion of parameters comprises at least one of:
the number of resource units of a resource set corresponding to a resource configuration in the time domain;
the number of resource units of the resource set in the frequency domain;
a time domain location of the first resource unit in the resource set;
a frequency domain location of the second resource unit in the resource set;
transmission attribute information corresponding to the resource set.

22. The resource configuration method according to any one of claims 1 to 21, wherein the first signaling is further configured to indicate transmission control information.

23. The resource configuration method according to claim 22, wherein the transmission control information comprises at least one of:
an access level of a terminal that is allowed to be communicated with the network device;
type information of the terminal that is allowed to be communicated with the network device; and
an access probability.

24. A resource configuration method, comprising:
receiving, by a zero-power-consumption terminal, a first signaling;
wherein the first signaling is configured to indicate at least one resource configuration; the at least one resource configuration and at least one resource set are in one-to-one correspondence with each other; each resource set of the at least one resource set comprises at least one resource unit for a backward link for zero-power-consumption communication.

25. The resource configuration method according to claim 24, wherein each resource configuration of the at least one resource configuration comprises at least one of:
a time domain length of each resource unit in a resource set corresponding to the each resource configuration;
bandwidth information of each resource unit in the resource set;
the number of resource units of the resource set in the time domain;
the number of resource units of the resource set in the frequency domain;
time domain location information of a first resource unit in the resource set;
frequency domain location information of a second resource unit in the resource set;
codeword information corresponding to the resource set;
transmission attribute information corresponding to the resource set; and
terminal classification information corresponding to the resource set.

26. The resource configuration method according to claim 24 or 25, further comprising:
determining, by the zero-power-consumption terminal, a location of each resource unit in a resource set corresponding each resource configuration of the at least one resource configuration based on the each resource configuration.

27. The resource configuration method according to claim 26, wherein the determining, by the zero-power-consumption terminal, a location of each resource unit in the resource set corresponding each resource configuration of the at least one resource configuration based on the each resource configuration, comprises:
determining, by the zero-power-consumption terminal, the earliest time domain location and/or the lowest frequency domain location occupied by the resource set based on the time domain location information of the first resource unit and/or the frequency domain location information of the second resource unit comprised in the each resource configuration;
determining, by the zero-power-consumption terminal, a location of each resource unit in the resource set based on the earliest time domain location and/or the lowest frequency domain location.

28. The resource configuration method according to any one of claims 24 to 27, further comprising:
selecting, by the zero-power-consumption terminal, a backward link resource set for the zero-power-consumption terminal from the at least one resource set based on the at least one resource configuration.

29. The resource configuration method according to claim 28, wherein the selecting a backward link resource set for the zero-power-consumption terminal from the at least one resource set based on the at least one resource configuration, comprises:
selecting, by the zero-power-consumption terminal, the backward link resource set for the zero-power-consumption terminal from the at least one resource set based on transmission attribute information corresponding to the at least one resource set.

30. The resource configuration method according to claim 28, wherein the selecting a backward link resource set for the zero-power-consumption terminal from the at least one resource set based on the at least one resource configuration, comprises:
selecting, by the zero-power-consumption terminal, the backward link resource set for the zero-power-consumption terminal from the at least one resource set according to terminal classification information corresponding to the at least one resource set.

31. The resource configuration method according to any one of claims 28 to 30, further comprising:
selecting, by the zero-power-consumption terminal, a resource unit for the zero-power-consumption terminal to perform backward link communication from the backward link resource set.

32. The resource configuration method according to claim 31, wherein the selecting a resource unit for the zero-power-consumption terminal to perform backward link communication from the backward link resource set, comprises:
randomly selecting, by the zero-power-consumption terminal, the resource unit used by the zero-power-consumption terminal to perform the backward link communication from the backward link resource set.

33. The resource configuration method according to any one of claims 28 to 32, further comprising:
determining, by the zero-power-consumption terminal, a codeword to be used by the zero-power-consumption terminal to perform the backward link communication based on codeword information corresponding to the backward link resource set.

34. The resource configuration method according to any one of claims 28 to 32, wherein the first signaling comprises a configuration signaling; and the method further comprises:
performing, by the zero-power-consumption terminal, the backward link communication in response to receiving the configuration signaling.

35. The resource configuration method according to claim 34, wherein the performing the backward link communication in response to receiving the configuration signaling, comprises:
performing, by the zero-power-consumption terminal, the backward link communication based on a resource unit selected from the at least one resource set, in response to receiving the configuration signaling.

36. The resource configuration method according to any one of claims 24 to 33, wherein the first signaling comprises:
a configuration signaling, configured to indicate a first portion of parameters of the at least one resource configuration; and
at least one scheduling signaling, each scheduling signaling of the at least one scheduling signaling being configured to indicate a second portion of parameters of part or all of the at least one resource configuration; and
the method further comprises:
performing, by the zero-power-consumption terminal, backward link communication in response to receiving the each scheduling signaling.

37. The resource configuration method according to claim 36, wherein the performing backward link communication in response to receiving the each scheduling signaling, comprises:
performing, by the zero-power-consumption terminal, the backward link communication based on a resource unit selected from the at least one resource set in response to receiving the configuration signaling.

38. The resource configuration method according to claim 36 or 37, wherein the receiving a first signaling, comprises:
receiving, by the zero-power-consumption terminal, the at least one scheduling signaling after receiving the configuration signaling.

39. The resource configuration method according to any one of claims 24 to 38, wherein the first signaling is further configured to indicate transmission control information; and the method further comprises:
determining, by the zero-power-consumption terminal, whether to perform backward link communication based on a resource unit selected from the at least one resource set, based on transmission control information.

40. The resource configuration method according to claim 39, wherein the determining whether to perform backward link communication based on a resource unit selected from the at least one resource set, based on transmission control information, comprises:
determining, by the zero-power-consumption terminal, to perform backward link communication based on the resource unit selected from the at least one resource set, in response to an access level of the zero-power-consumption terminal be matched with an access level in the transmission control information.

41. The resource configuration method according to claim 39, wherein the determining whether to perform backward link communication based on a resource unit selected from the at least one resource set, based on transmission control information, comprises:
determining, by the zero-power-consumption terminal, to perform the backward link communication based on the resource unit selected from the at least one resource set, in response to a type of the zero-power-consumption terminal being matched with type information in the transmission control information.

42. The resource configuration method according to claim 39, wherein the determining, whether to perform backward link communication based on a resource unit selected from the at least one resource set based on the transmission control information, comprises:
generating, by the zero-power-consumption terminal, a random number; and
determining to perform the backward link communication based on the resource unit selected from the at least one resource set, in response to the random number being less than or equal to access probability in the transmission control information.

43. A network device, comprising:
a first communication module, configured to send a first signaling;
wherein the first signaling is configured to indicate at least one resource configuration; the at least one resource configuration and at least one resource set is in one-to-one correspondence with each other; each resource set of the at least one resource set comprises at least one resource unit for a backward link for zero-power-consumption communication.

44. The network device according to claim 43, wherein the backward link comprises a backscattering communication link.

45. The network device according to claim 43 or 44, wherein, each resource configuration of the at least one resource configuration comprises at least one of:
a time domain length of each resource unit in a resource set corresponding to the each resource configuration;
bandwidth information of each resource unit in the resource set;
the number of resource units in the resource set in a time domain;
the number of resource units in the resource set in a frequency domain;
time domain location information of a first resource unit in the resource set;
frequency domain location information of a second resource unit in the resource set;
codeword information corresponding to the resource set;
transmission attribute information corresponding to the resource set; and
terminal classification information corresponding to the resource set.

46. The network device according to claim 45, wherein a unit of the time domain length is microsecond, millisecond, symbol, or time slot.

47. The network device according to claim 45 or 46, wherein the bandwidth information comprises the number of occupied physical resource blocks (PRBs) and/or a bandwidth size.

48. The network device according to any one of claims 45 to 47, wherein in response to the resource set comprising resource units that are distributed discontinuously in the time domain, the each resource configuration further comprises distribution of at least one resource unit in the resource set in the time domain.

49. The network device according to any one of claims 45 to 48, wherein in response to the resource set comprising resource units that are discontinuously distributed in the frequency domain, the each resource configuration further comprises distribution of at least one resource unit in the resource set in the frequency domain.

50. The network device according to any one of claims 45 to 49, wherein the first resource unit comprises a resource unit that is located at the earliest time domain location in the resource set.

51. The network device according to any one of claims 45 to 50, wherein the time domain location information of the first resource unit comprises absolute time location information of the first resource unit and/or a time interval between the first resource unit and the first signaling.

52. The network device according to any one of claims 45 to 51, wherein the second resource unit comprises a resource unit that is located at the lowest frequency domain location in the resource set.

53. The network device according to any one of claims 45 to 52, wherein the frequency domain location information of the second resource unit comprises at least one of: a serial number of a PRB occupied by the second resource unit, an index of a channel occupied by the second resource unit, and a frequency offset between the second resource unit and the first signaling.

54. The network device according to any one of claims 45 to 53, wherein the codeword information comprises orthogonal code information and/or non-orthogonal code information.

55. The network device according to any one of claims 45 to 54, wherein the codeword information comprises at least one of: a length of codewords, the number of available codewords, and an index of the available codewords.

56. The network device according to any one of claims 45 to 55, wherein the transmission attribute information comprises at least one of: a transmission rate, a data block size, and a modulation coding level.

57. The network device according to any one of claims 45 to 56, wherein the terminal classification information comprises a priority level of a terminal.

58. The network device according to any one of claims 45 to 57, wherein all or part of parameters of the at least one resource set are different from each other.

59. The network device according to any one of claims 43 to 58, wherein the first signaling comprises a system message.

60. The network device according to any one of claims 43 to 58, wherein the first signaling comprises a configuration signaling configured to trigger backward link communication.

61. The network device according to any one of claims 43 to 58, wherein the first signaling comprises:
a configuration signaling, configured to indicate a first portion of parameters of the at least one resource configuration; and
at least one scheduling signaling, each scheduling signaling of the at least one scheduling signaling being configured to indicate a second portion of parameters of part or all of the at least one resource configuration and to trigger backward link communication.

62. The network device according to claim 61, wherein the first communication module is configured to:
send the at least one scheduling signaling after sending the configuration signaling.

63. The network device according to claim 61 or 62, wherein the second portion of parameters comprises at least one of:
the number of resource units of a resource set corresponding to a resource configuration in the time domain;
the number of resource units of the resource set in the frequency domain;
a time domain location of the first resource unit in the resource set;
a frequency domain location of the second resource unit in the resource set;
transmission attribute information corresponding to the resource set.

64. The network device according to any one of claims 43 to 63, wherein the first signaling is further configured to indicate transmission control information.

65. The network device according to claim 64, wherein the transmission control information comprises at least one of:
an access level of a terminal that is allowed to be communicated with the network device;
type information of the terminal that is allowed to be communicated with the network device; and
an access probability.

66. A zero-power-consumption terminal, comprising:
a second communication module, configured to receive a first signaling;
wherein the first signaling is configured to indicate at least one resource configuration; the at least one resource configuration and at least one resource set are in one-to-one correspondence with each other; each resource set of the at least one resource set comprises at least one resource unit for a backward link for zero-power-consumption communication.

67. The zero-power-consumption terminal according to claim 66, wherein each resource configuration of the at least one resource configuration comprises at least one of:
a time domain length of each resource unit in a resource set corresponding to the each resource configuration;
bandwidth information of each resource unit in the resource set;
the number of resource units of the resource set in the time domain;
the number of resource units of the resource set in the frequency domain;
time domain location information of a first resource unit in the resource set;
frequency domain location information of a second resource unit in the resource set;
codeword information corresponding to the resource set;
transmission attribute information corresponding to the resource set; and
terminal classification information corresponding to the resource set.

68. The zero-power-consumption terminal according to claim 66 or 67, further comprising a location determination module, configured to: determine a location of each resource unit in a resource set corresponding each resource configuration of the at least one resource configuration based on the each resource configuration.

69. The zero-power-consumption terminal according to claim 68, wherein the location determination module is configured to:
determine the earliest time domain location and/or the lowest frequency domain location occupied by the resource set based on the time domain location information of the first resource unit and/or the frequency domain location information of the second resource unit comprised in the each resource configuration;
determine a location of each resource unit in the resource set based on the earliest time domain location and/or the lowest frequency domain location.

70. The zero-power-consumption terminal according to any one of claims 66 to 69, further comprising a set selection module, configured to: select a backward link resource set for the zero-power-consumption terminal from the at least one resource set based on the at least one resource configuration.

71. The zero-power-consumption terminal according to claim 70, wherein the set selection module is configured to:
select the backward link resource set for the zero-power-consumption terminal from the at least one resource set based on transmission attribute information corresponding to the at least one resource set.

72. The zero-power-consumption terminal according to claim 70, wherein the set selection module is configured to:
select the backward link resource set for the zero-power-consumption terminal from the at least one resource set according to terminal classification information corresponding to the at least one resource set.

73. The zero-power-consumption terminal according to any one of claims 70 to 72, further comprising a resource selection module, configured to:
select a resource unit for the zero-power-consumption terminal to perform backward link communication from the backward link resource set.

74. The zero-power-consumption terminal according to claim 73, wherein the resource selection module is configured to:
randomly select the resource unit used by the zero-power-consumption terminal to perform the backward link communication from the backward link resource set.

75. The zero-power-consumption terminal according to any one of claims 70 to 74, further comprising a codeword determination module, configured to: determine a codeword to be used by the zero-power-consumption terminal to perform the backward link communication based on codeword information corresponding to the backward link resource set.

76. The zero-power-consumption terminal according to any one of claims 66 to 75, wherein the first signaling comprises a configuration signaling; and the second communication module is further configured to: perform the backward link communication in response to receiving the configuration signaling.

77. The zero-power-consumption terminal according to claim 76, wherein the second communication module is further configured to:
perform the backward link communication based on a resource unit selected from the at least one resource set, in response to receiving the configuration signaling.

78. The zero-power-consumption terminal according to any one of claims 66 to 75, wherein the first signaling comprises:
a configuration signaling, configured to indicate a first portion of parameters of the at least one resource configuration; and
at least one scheduling signaling, each scheduling signaling of the at least one scheduling signaling being configured to indicate a second portion of parameters of part or all of the at least one resource configuration; and
the second communication module is configured to:
perform backward link communication in response to receiving the each scheduling signaling.

79. The zero-power-consumption terminal according to claim 78, wherein the second communication module is configured to:
perform the backward link communication based on a resource unit selected from the at least one resource set in response to receiving the configuration signaling.

80. The zero-power-consumption terminal according to claim 78 or 79, wherein the second communication module is configured to:
receive the at least one scheduling signaling after receiving the configuration signaling.

81. The zero-power-consumption terminal according to any one of claims 66 to 80, wherein the first signaling is further configured to indicate transmission control information; and
the zero-power-consumption terminal further comprises a transmission control module configured to: determine whether to perform backward link communication based on a resource unit selected from the at least one resource set, based on transmission control information.

82. The zero-power-consumption terminal according to claim 81, wherein the transmission control module is configured to:
determine to perform backward link communication based on the resource unit selected from the at least one resource set, in response to an access level of the zero-power-consumption terminal being matched with an access level in the transmission control information.

83. The zero-power-consumption terminal according to claim 81, wherein the transmission control module is configured to:
determine to perform the backward link communication based on the resource unit selected from the at least one resource set, in response to a type of the zero-power-consumption terminal being matched with type information in the transmission control information.

84. The zero-power-consumption terminal according to claim 81, wherein the transmission control module is configured to:
generate a random number and determine to perform the backward link communication based on the resource unit selected from the at least one resource set, in response to the random number being less than or equal to access probability in the transmission control information.

85. A network device, comprising: a processor and a memory, wherein the memory is configured to store a computer program, the processor is configured to invoke and run the computer program stored in the memory to perform the method as claimed in any one of claims 1 to 23.

86. A network device, comprising: a processor and a memory, wherein the memory is configured to store a computer program, the processor is configured to invoke and run the computer program stored in the memory to perform the method as claimed in any one of claims 24 to 42.

87. A chip, comprising:
a processor, configured to invoke and run a computer program from a memory to cause a device arranged with the chip to perform the method as claimed in any one of claims 1 to 42.

88. A computer-readable storage medium, configured to store a computer program, wherein,
the computer program is configured to cause a computer to perform the method as claimed in any one of claims 1 to 42.

89. A computer program product, comprising computer program instructions, wherein,
the computer program instructions are configured to cause a computer to perform the method as claimed in any one of claims 1 to 42.

90. A computer program, configured to cause a computer to perform the method as claimed in any one of claims 1 to 42.

91. A communication system, comprising:
a network device, configured to perform the method as claimed in any one of claims 1 to 23; and
a zero-power-consumption terminal, configured to perform the method as claimed in any one of claims 24 to 42.
